# FASCICULE DE BREVET EUROPEEN

(11) **EP 2 146 494 B1**
(45) Date de publication et mention de la délivrance du brevet: **29.09.2021**
(21) Numéro de dépôt: 09159483.8
(22) Date de dépôt: 06.05.2009
(51) Int. Cl.: H04M 3/42

(54) **Procédé de gestion de données personnelles multimédia dans un réseau de télécommunications et installation correspondante**
Verwaltungsverfahren von persönlichen Multimediadaten in einem Funknetz und entsprechende Anlage
Method for managing personal multimedia data in a telecommunications network and corresponding installation

(30) Priorité: 16.07.2008 FR 0854842
(43) Date de publication de la demande: 20.01.2010
(73) Titulaire: SOCIETE FRANCAISE DU RADIOTELEPHONE-SFR, 75015 Paris (FR)
(72) Inventeur: Faisy, Christian, 97417 La Montagne (FR)
(74) Mandataire: Ipside

(56) Documents cités:
- EP-A2- 1 881 671
- WO-A1-2008/046308
- EA-B1- 006 379
- US-A1- 2005 120 050
- US-A1- 2007 047 523
- US-A1- 2007 162 608
- US-B2- 6 928 230

## Description

### Domaine de l'invention

La présente invention a pour objet un procédé de gestion de données personnelles multimédia dans un réseau de télécommunications fixe ou mobile. Plus particulièrement, la présente invention concerne un procédé de sauvegarde de données multimédia personnelles dans un réseau de communication, de préférence un réseau de téléphonie mobile, et un procédé de gestion des données sauvegardées par un terminal relié au réseau.

L'invention a également pour objet une installation de télécommunications comportant des moyens pour mettre en œuvre le procédé de gestion de données personnelles multimédia de l'invention.

Un but de l'invention est de garantir d'une part l'authenticité du terminal émetteur des données multimédia à sauvegarder et d'autre part l'authenticité de l'utilisateur consultant les données sauvegardées.

### Etat de la technique

Actuellement, les réseaux de communications mettent à disposition de chacun de leurs abonnés une boîte vocale. Cette boîte vocale est une mémoire de messagerie vocale individualisée permettant d'enregistrer des messages vocaux, lorsque le téléphone de l'abonné n'est pas accessible ou par l'actionnement de la fonction renvoi d'appel vers la messagerie vocale, par l'utilisateur du téléphone mobile.

Les réseaux de communications mettent également à disposition de chacun de leurs abonnés une mémoire de messagerie SMS et MMS individualisée pour enregistrer respectivement des messages au format SMS (Short Message Service ou Service de Messagerie Court) et au format MMS (Multimedia messaging service ou Service de Messagerie Multimédia).

Toutefois, la boîte vocale ainsi que les mémoires de messagerie SMS et MMS mises à la disposition de l'abonné présentent l'inconvénient de ne conserver les messages sauvegardés que pendant une durée limitée par exemple à quelques semaines, quand le nombre de messages susceptibles d'être conservés n'est pas lui-même plafonné. La capacité de stockage allouée à l'abonné pour enregistrer les messages reçus est définie au préalable et de manière générale par l'opérateur du réseau.

Le fait de limiter la durée de conservation des messages vocaux, SMS et MMS ainsi que la capacité de stockage de leurs mémoires respectives de manière générale et systématique à chaque nouvel abonné, sans prendre en considération ses besoins réels est un inconvénient majeur pour l'abonné qui veut archiver ses messages importants pour une durée indéterminée.

Actuellement, les téléphones mobiles des abonnés comportent une carte SIM et une mémoire de messagerie interne leur permettant de sauvegarder des messages de type SMS et MMS pendant une durée indéterminée. Toutefois, la mémoire de messagerie disponible sur la carte SIM est très faible. Elle ne peut en général comporter que 10 à 50 SMS. De même, la mémoire interne SMS et MMS des téléphones mobiles est également limitée, par exemple de 50 à 1000 SMS, selon le modèle du téléphone mobile. Ainsi, en cas de saturation de la mémoire de messagerie SMS et MMS, l'abonné est obligé de supprimer des messages sauvegardés pour recevoir d'autres messages.

Pour conserver pour une durée illimitée les messages SMS ou MMS enregistrés dans le téléphone mobile, l'abonné est obligé d'avoir recours à des solutions malaisées, telles que trouver les moyens permettant de transférer les SMS voire les MMS du téléphone mobile de l'abonné à une mémoire externe, par exemple d'un ordinateur personnel. Ces moyens dépendent du modèle de téléphone mobile de l'abonné, ces moyens peuvent consister en un moyen matériel tel qu'un câble ou un encore un moyen logiciel. Toutefois, même si l'abonné arrive à trouver le bon moyen pour transférer les messages SMS et voire les messages MMS, ce qui est parfois ardu, il lui faudra en plus gérer l'archivage des messages et leur confidentialité. Cette gestion demande à l'abonné des connaissances informatiques.

Par conséquent, le fait d'une part, de se procurer le bon moyen de transfert des données et d'autre part la mise en oeuvre d'un archivage de ces données transférées sont des obstacles non négligeables pour l'abonné qui n'a pas les connaissances nécessaires en informatique.

Dans l'état de la technique il est connu le document US 2007/0047523 A1 qui décrit une méthode pour transmettre directement un contenu (multimédia) à au moins un destinataire via un réseau de télécommunication, lors de l'établissement d'une communication entre un appelant et le destinataire.

Il est également connu le document US 2007/0162608 A1 qui décrit une méthode pour utiliser les services fournis par un fournisseur de services via un système de communication.

Aucun de ces documents ne traite le problème d'archivage des messages SMS, MMS et vocaux rencontré par les abonnés.

On connaît également dans l'état de la technique la demande internationale N° WO 2008/046308, qui décrit un système de stockage en réseau, et un procédé de commande pour accéder au contenu stocké en réseau.

On connaît également dans l'état de la technique le brevet américain N° US 6 928 230 B2 qui se rapporte à un procédé d'association d'enregistrements et de données auxiliaires.

Ainsi, actuellement et depuis un certain temps, un besoin de confidentialité et de pérennité des messages vocaux, SMS et MMS de l'abonné s'est fait sentir.

### Exposé de l'invention

L'invention a justement pour but de répondre à ce besoin en remédiant aux inconvénients des techniques exposées précédemment. Pour cela, l'invention propose un procédé de gestion de données personnelles multimédia dans un réseau de télécommunications fixe ou mobile.

Pour ce faire, l'invention met en œuvre un dispositif dédié du réseau de télécommunications dans lequel sont stockées et gérées les données multimédia personnelles de l'abonné du réseau ayant souscrit au préalable à une offre de services de stockage de l'opérateur.

Le fonctionnement du procédé selon l'invention est le suivant :
- Dans un premier temps, l'utilisateur, abonné de l'opérateur, souscrit à un service de stockage de l'opérateur en définissant éventuellement la capacité de mémoire de stockage et la durée de stockage, selon des offres de services proposées par l'opérateur.

Un espace mémoire personnalisé spécial ayant la capacité et la durée de conservation souscrites est associé à l'identifiant de l'abonné dans le réseau.
- Lorsqu'un abonné du réseau, ayant souscrit au préalable au service de stockage, appelle son propre numéro ou s'envoie un message texte ou multimédia, le réseau détecte le souscripteur du service, oriente et traite de manière intelligente les messages à stocker en fonction du type de média sollicité. Ces messages traités sont ensuite stockés dans l'espace mémoire spécial.
- L'accès en gestion de ces messages stockés se fait par le biais de l'authentification du numéro émetteur de l'appel ou du message associé à un identifiant et/ou un code secret connus, du seul propriétaire de la carte SIM insérée dans le terminal souscripteur du service.

La présente invention présente ainsi l'avantage de proposer un service de stockage de données personnelles à la demande, à des utilisateurs, tout en leur garantissant l'authenticité de l'émetteur du message d'une part et l'authenticité de la personne consultant ces messages d'autre part.

L'invention permet ainsi aux utilisateurs souscripteurs de sauvegarder des données très personnelles telles que notamment des données de menaces de mort, de secrets de famille, de journal personnel, de testament ou de preuves d'antériorité. D'une manière générale, l'invention permet aux souscripteurs de conserver notamment des messages audio, vidéo, des photos ou des textes pendant une durée définie par le souscripteur, par exemple à vie.

Le procédé de l'invention permet ainsi à l'opérateur du réseau de réaliser une méthode de stockage personnalisée des données multimédia de ses abonnés, en fonction du type de services de stockage souscrit par l'abonné auprès de l'opérateur. Le type de services dépend de la capacité de stockage des données personnelles, de la durée de stockage et de la confidentialité des données.

L'invention a donc pour objet un procédé de gestion de données multimédia personnelles selon la revendication 1.

Des modes de réalisation préférés sont décrits dans les revendications dépendantes 2 à 12.

L'invention a également pour objet une installation de télécommunications comportant un serveur de services selon la revendication 13.

### Brève description des dessins

L'invention sera mieux comprise à la lecture de la description qui suit et à l'examen des figures qui l'accompagnent. Celles-ci sont présentées à titre indicatif et nullement limitatif de l'invention.
La figure 1 montre une représentation schématique d'un réseau d'un opérateur muni des moyens perfectionnés de l'invention.
La figure 2 montre une illustration d'étapes correspondant à une souscription d'un utilisateur à un service de stockage d'un opérateur.
La figure 3 montre une illustration d'étapes correspondant à l'émission d'une requête de stockage.
La figure 4 montre une illustration de moyens mettant en œuvre le procédé de l'invention.

### Description détaillée de modes de réalisation de l'invention

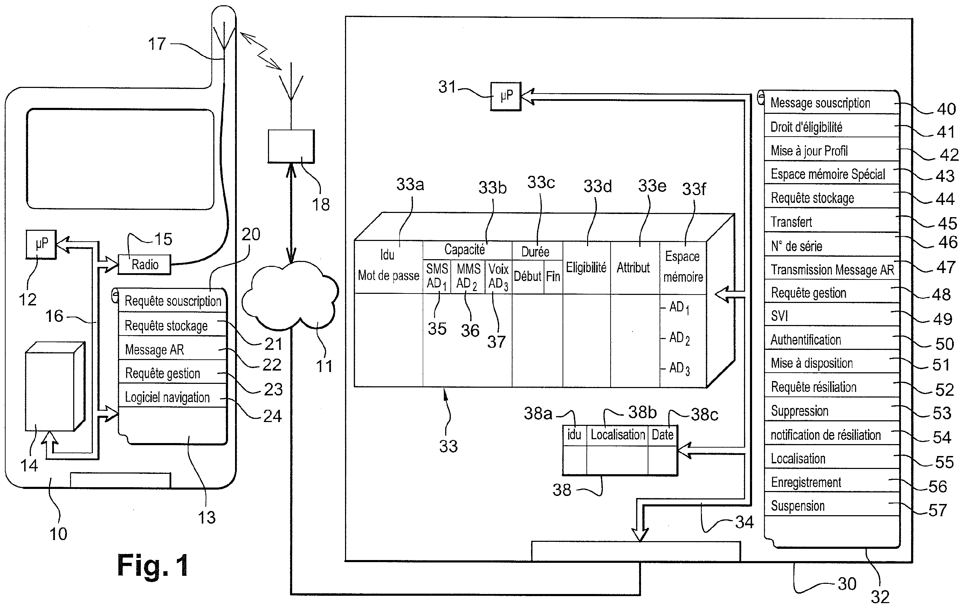

La figure 1 montre un terminal 10 d'un utilisateur, client d'un opérateur, en liaison avec un réseau 11 d'un opérateur de téléphonie mobile. Pour le reste de la description, on considère que le terminal 10 est un téléphone mobile. Le terminal 10 pourrait aussi être un ordinateur individuel, un assistant personnel ou tout autre dispositif équivalent.

Dans la description, on prête des actions à des appareils ou à des programmes, cela signifie que ces actions sont exécutées par un microprocesseur de cet appareil ou de l'appareil comportant le programme, ledit microprocesseur étant alors commandé par des codes instructions enregistrés dans une mémoire de l'appareil. Ces codes instructions permettent de mettre en œuvre les moyens de l'appareil et donc de réaliser l'action entreprise.

Le terminal 10 comporte, outre une carte SIM (Subscriber Identity Module) contenant l'IMSI (International Mobile Subscriber Identity) et le MSISDN (Mobile Subscriber Integrated Services Digital Number), un microprocesseur 12, une mémoire 13 de programme, une mémoire 14 de données et des circuits 15 d'interface radio avec le réseau 10 de l'opérateur de téléphonie. Les éléments 12 à 15 sont connectés par un bus 16.

La mémoire 13 de programme est divisée en plusieurs zones, chaque zone correspondant à une fonction ou à un mode de fonctionnement du programme du terminal 10.

Une zone 20 comporte des codes instructions pour émettre sur le réseau 11 une requête de souscription au service de stockage de l'opérateur du réseau, en conséquence d'une validation d'un message de souscription de l'opérateur. Cette requête de souscription comporte des caractéristiques de stockage telles que notamment :
- la durée de stockage,
- la capacité de stockage,
- l'envoi des données stockées à l'utilisateur tous les X jours,
- le choix du support physique pour cet envoi,
- le format des données à envoyer, etc...

Une zone 21 comporte des codes instructions pour élaborer et transmettre une requête de stockage comportant des messages multimédia reçus au numéro de téléphone de l'utilisateur, lorsqu'un renvoi automatique est mis en place. Ce renvoi automatique peut être subordonné d'opérations conditionnelles et/ou d'opérations de paramétrages de planification de fréquence de renvoi.

Une zone 22 comporte des codes instructions pour recevoir du réseau 11 un message de notification de confirmation d'enregistrement du message multimédia. Les codes instructions de la zone 22 permettent également d'enregistrer dans la mémoire de données ladite notification. Cet enregistrement peut être du type premier entré, premier sorti connu sous le nom anglais de "First In, First out (FIFO)", où les nouvelles notifications reçues sont enregistrées au détriment des anciennes notifications déjà enregistrées.

Une zone 23 comporte des codes instructions pour transmettre une requête de gestion au réseau 11 en conséquence d'un appel de l'utilisateur du terminal 10 à son propre numéro. Une zone 24 comporte des codes instructions pour exécuter un logiciel de navigation permettant au souscripteur de rechercher, de consulter, de réorganiser ou de supprimer des messages personnels stockés.

Le téléphone 10 comporte une antenne 17 connectée au circuit 15 lui permettant d'effectuer une liaison radioélectrique avec le réseau 11, via une installation de télécommunications telle qu'une station de base 18. Le rôle des circuits 15 est d'assurer l'interface radio entre le terminal 10 et le réseau 11 de l'opérateur. Dans la description, on a choisi la norme GSM, mais il pourrait s'agir d'une autre norme, comme le PCS, le DCS, l'UMTS, l'HSDPA ou toutes autres normes radioélectriques existantes et/ou à venir.

Le routage des communications à travers le réseau 11, l'identification et les droits d'accès de l'appelant sont gérés par un serveur de routage du réseau de l'opérateur (non représenté). Ce serveur détermine l'éligibilité de la communication établie entre ce terminal 10 et un serveur 30 de services spécial de stockage de données personnelles. Pour ce faire, il est associé à ce serveur de routage une mémoire de données permettant d'enregistrer des identifiants/adresses id_{U} d'abonnés de l'opérateur gérant le réseau 11. Un identifiant/adresse id_{U} permet au réseau 11 d'identifier l'utilisateur du terminal 10. Cet identifiant/adresse id_{U} peut être un numéro de téléphone (MSISDN), une adresse IP version 4 ou 6, etc...

Cette mémoire de données peut être une carte d'identification de type USIM pour Universal Subscriber Identity Module ou SIM. A cet identifiant/adresse id_{U} est associé un profil de services et d'abonnements qui est mémorisé dans une base de données du réseau.

Cette base de données du réseau est de préférence un enregistreur de localisation nominal, plus connu sous le non anglais de HLR ou Home Location Register. Dans ce cas, elle est une base de données centrale comportant les informations relatives à tout abonné autorisé à utiliser ce réseau. Afin que les données soient cohérentes sur l'ensemble du réseau, c'est elle qui sert de référence aux autres bases de données locales du réseau.

La base de données du réseau peut être aussi un serveur connu sous le nom anglais de RADIUS ou Remote Authentication Dial-In User Service. Ce serveur RADIUS utilise un protocole client-serveur afin de centraliser des données d'identification de l'abonné.

La base de données du réseau fournit ainsi au réseau 11 le profil de l'utilisateur correspondant à la liste des services auxquels a droit l'utilisateur.

Le serveur 30 de services de stockage comporte un microprocesseur 31, une mémoire 32 de programme, une base 33 de données de services et une mémoire 38 de données de localisation interconnectés par un bus 34.

La mémoire 32 de programme est divisée en plusieurs zones, chaque zone correspondant à une fonction ou à un mode de fonctionnement du programme du serveur 30 de services de stockage de l'opérateur.

Une zone 40 comporte des codes instructions pour élaborer et émettre un message de souscription au service de stockage de l'opérateur vers le réseau 11 à destination d'une liste d'abonnés prédéfinie. Une zone 41 comporte des codes instructions pour attribuer un droit d'éligibilité au service de stockage de l'opérateur à un utilisateur, lorsque le serveur 30 de services reçoit du réseau 11 une requête de souscription dudit utilisateur. Ce droit d'éligibilité peut être notamment un identifiant unique alphanumérique ou un nombre binaire. Ce droit d'éligibilité associé à l'identifiant/adresse id_{U} de l'utilisateur est enregistré dans la base 33 de données de services.

Une zone 42 comporte également des codes instructions pour élaborer et transmettre à la base de données du réseau une signalisation comportant le droit d'éligibilité attribué afin que le profil de l'abonné dans le réseau soit mis à jour.

Une zone 43 comporte des codes instructions pour affecter un espace mémoire spécial à l'utilisateur, lors de l'attribution d'un droit d'éligibilité. Cet espace mémoire spécial est associé à l'identifiant/adresse id_{U} de l'utilisateur. Un régime de cet espace mémoire spécial est déterminé, selon les caractéristiques de stockage de la requête de souscription.

Cet espace mémoire spécial est de préférence une mémoire de messagerie spéciale différente des mémoires de messageries individualisées attribuées à l'utilisateur, lors de l'abonnement au réseau de l'opérateur.

Dans une variante, l'espace mémoire spécial peut être les mémoires de messageries individualisées affectées d'un attribut. Un attribut est un paramètre interne du serveur 30 de service de l'opérateur. Il peut être un nombre binaire ou alphanumérique. Dès qu'un attribut est affecté à une mémoire de messagerie, cette mémoire ne peut plus être effacée par l'opérateur et une autorisation de dépassement de capacité est activée.

Une zone 44 comporte des codes instructions pour recevoir et traiter les messages multimédia contenus dans les requêtes de stockage reçues du réseau 11. Une zone 45 comporte des codes instructions pour déterminer, en fonction du type multimédia, une adresse de l'espace mémoire spécial où transférer le message multimédia contenu dans la requête de stockage à enregistrer. Cette détermination de l'adresse de l'espace mémoire spécial est faite à partir de la base 33 de données de services.

Une zone 46 comporte des codes instructions pour générer un numéro de série à associer au message multimédia enregistré dans l'espace mémoire spécial correspondant. Ce numéro de série peut comporter plusieurs champs de renseignement sur le message stocké. Il peut comporter, entre autres, un premier champ dans lequel est enregistrée la date d'enregistrement dudit message, un deuxième champ où est enregistré un numéro d'ordre d'enregistrement, un troisième champ où est enregistrée la taille du message, un quatrième champ où est enregistré le type multimédia du message et/ou un cinquième champ où est enregistrée la durée du message lorsque le message est vocal. Cette liste de champs du numéro de série n'est pas exhaustive. Le numéro d'ordre d'enregistrement est de préférence généré par les codes instructions de la zone 64 de manière incrémentale. Le fait d'associer les messages multimédia à un numéro d'ordre incrémental permet de réaliser une sauvegarde très efficace, rapide et flexible avec un temps réduit pour la restauration des données.

Dans une variante, le numéro de série peut être généré de manière aléatoire et de préférence incrémentale.

Une zone 47 comporte des codes instructions pour élaborer une notification de confirmation d'enregistrement comportant le numéro de série du message enregistré. Cette zone 47 comporte également des codes instructions pour transmettre cette notification au terminal 10 via le réseau 11.

Une zone 48 comporte des codes instructions pour recevoir et traiter les requêtes de gestion reçues du réseau 11. Une zone 49 comporte des codes instructions pour exécuter un logiciel de menu vocal interactif, dès la réception d'une requête de gestion.

Dans une variante, un serveur vocal interactif (non représenté) peut être utilisé comme porte d'entrée d'un centre d'appel. Dans ce cas, Le serveur vocal sert de passerelle entre le terminal 10 et le serveur 30 de services, lors d'une requête de gestion.

Une zone 50 comporte des codes instructions pour authentifier l'utilisateur. Si la requête de gestion ne comporte pas directement un identifiant et/ou un mot de passe d'authentification, les codes instructions de la zone 50 transmettent au terminal 10 une demande d'authentification par un identifiant et/ou par un mot de passe. Cette demande d'authentification peut être faite par l'envoi d'un message SMS ou par l'envoi d'un message vocal. Une zone 51 comporte des codes instructions pour mettre à disposition de l'utilisateur l'espace mémoire de stockage personnalisé qui lui est dédié, lorsque l'authentification de l'utilisateur a été validée.

Une zone 52 comporte des codes instructions pour recevoir et traiter une requête de résiliation transmise par un utilisateur via le réseau 11. Une zone 53 comporte des codes instructions pour supprimer de la base 33 d'identification la ligne de la table comportant les renseignements sur un identifiant/adresse id_{U} d'un utilisateur ainsi que toutes les données contenues dans l'espace mémoire de stockage spécial personnalisé qui lui était alloué. Cette suppression peut être faite immédiatement dès la réception de la requête de résiliation. Elle est de manière générale effectuée dans les X jours de réception de la requête de résiliation, X étant un nombre entier positif défini de préférence au préalable par l'utilisateur et l'opérateur du réseau. Dans une variante, cette suppression peut être faite par un administrateur du réseau. Les codes instructions de la zone 53 élaborent et transmettent également à la base de données du réseau une signalisation comportant des instructions pour la suppression du droit d'éligibilité attribué afin que le profil de l'abonné soit mis à jour dans le réseau 11.

Une zone 54 comporte des codes instructions pour élaborer et envoyer au terminal 10, via le réseau 11, une notification de confirmation de résiliation. Cette notification peut être de type SMS ou vocal.

Une zone 55 comporte des codes instructions pour déterminer une position géographique du terminal 10 à des intervalles dans le temps prédéfinis. Cette localisation géographique est déterminée selon des coordonnées polaires, à partir de la localisation de la base 18 station. Une zone 56 comporte des codes instructions pour enregistrer dans la mémoire de données 38 de localisation la position géographique déterminée. Dans une variante, cette position géographique déterminée peut être enregistrée dans l'espace mémoire spécial.

Une zone 57 comporte des codes instructions pour recevoir et traiter une requête de suspension du droit d'éligibilité transmise par un administrateur du réseau.

Les codes instructions de la zone 57 élaborent et transmettent également à la base de données du réseau une signalisation comportant des instructions pour la suspension du droit d'éligibilité attribué afin que le profil de l'abonné soit mis à jour dans le réseau 11. Cette suspension est faite immédiatement dès la réception de la requête de suspension.

Cette requête de suspension est assortie d'un délai de X jours de suspension temporaire. Au plus tard à la fin du délai, soit le droit d'éligibilité est réactivé soit le droit d'éligibilité est supprimé. Cette réactivation ou cette suppression peut être effectuée automatiquement par une planification d'une transmission d'une signalisation, de réactivation ou de suppression du droit d'éligibilité, à la base de données du réseau. Cette réactivation ou cette suppression peut être effectuée manuellement par l'administrateur du réseau.

La requête de suspension est élaborée et transmise au serveur 30, par exemple:
- en cas de non paiement du service de stockage souscrit par l'utilisateur,
- lorsque la capacité de stockage est saturée, ou
- lorsque la durée de stockage est atteinte.

En cas de suspension, toute requête de connexion entraîne l'élaboration et la transmission d'un message de suspension au terminal de l'utilisateur. Ce message de suspension peut être vocal ou de type SMS. Le message de connexion peut être "le droit d'éligibilité au service de stockage est suspendu". Dans une variante la requête de connexion est routée de manière classique vers la messagerie vocale ou SMS du terminal 10 en cas de programmation de renvoi conditionnel ou vers le terminal 10 lui-même entrainant une tonalité d'occupation.

La base 33 de données de services est, par exemple, structurée en une table. Par exemple, chaque ligne de la table correspond à un utilisateur, chaque colonne de la table correspond à un renseignement sur cet utilisateur. Ainsi, la base 33 de données comporte une ligne 33a correspondant à un identifiant/adresse id_{U} de l'utilisateur. Cet identifiant/adresse id_{U} comporte un champ où est renseigné un identifiant et/ou un mot de passe d'authentification connu du seul abonné.

La base 33 de données comporte une colonne 33b correspondant à un paramètre de capacité de stockage. Ce paramètre de capacité de stockage comporte trois champs. Un premier champ 35 renseigne une adresse AD₁ de la partie de l'espace mémoire spécial où stocker les messages de type SMS ainsi que la capacité de stockage allouée à ce type de données. Un deuxième champ 36 renseigne une adresse AD₂ de la partie de l'espace mémoire spécial où stocker les messages de type MMS ainsi que la capacité de stockage allouée à ce type de données. Un troisième champ 37 renseigne une adresse AD₃ de la partie de l'espace mémoire spécial où stocker les messages de type voix ainsi que la capacité de stockage allouée à ce type de données. L'adresse AD est une adresse mémoire et peut être un simple identifiant alphanumérique.

Dans une variante, une telle adresse AD est, par exemple, soit une adresse Internet selon un protocole IP, soit une URL (pour Universal Resource Locator en anglais ou Localisation Universelle de Ressources). Dans ce cas, à chaque adresse AD est associé un serveur de messagerie, selon le type du multimédia à stocker.

La base 33 de données comporte une colonne 33c correspondant à un paramètre de durée. Ce paramètre de durée comporte un champ début et un champ fin.

Les paramètres de capacité et de durée correspondent au régime de l'espace mémoire spécial, déterminé selon les caractéristiques de la requête de souscription.

La base 33 de données comporte une colonne 33d correspondant à un droit d'éligibilité associé à l'identifiant/adresse id_{U} de l'utilisateur. La base 33 de données comporte une colonne 33e correspondant à un attribut affecté à un espace mémoire lorsque ce dernier est une mémoire de messagerie attribuée à l'utilisateur, lors de l'abonnement au réseau de l'opérateur. Une colonne 33f correspond à l'espace mémoire spécial affecté à l'utilisateur.

La base 38 de données de localisation comporte au moins trois colonnes, une colonne 38a pour enregistrer un identifiant/adresse idᵤ d'un utilisateur, une colonne 38b pour enregistrer la position géographique et une colonne 38c pour enregistrer la date de détermination. Lorsque la base 38 de données arrive à saturation, les nouvelles positions géographiques déterminées sont enregistrées au détriment des anciennes positions géographiques déjà enregistrées. Cet enregistrement est du type premier entré premier sorti ou "First In, First out (FIFO)" en anglais.

La représentation de l'espace mémoire spécial dans la base 33 de données et de la mémoire 38 de données de localisation du serveur 30 dans la figure 1 n'est qu'une illustration d'implantation de composants et d'enregistrements de données. Dans la pratique ces mémoires sont unifiées ou distribuées selon des contraintes de taille (capacité) et/ou de rapidité des traitements souhaités.

En outre, l'espace mémoire spécial peut être réparti sur d'autres serveurs de l'opérateur du téléphonie mobile, éventuellement selon le type de multimédia, sous forme de bases de données auxquelles les serveurs respectifs ont alors accès.

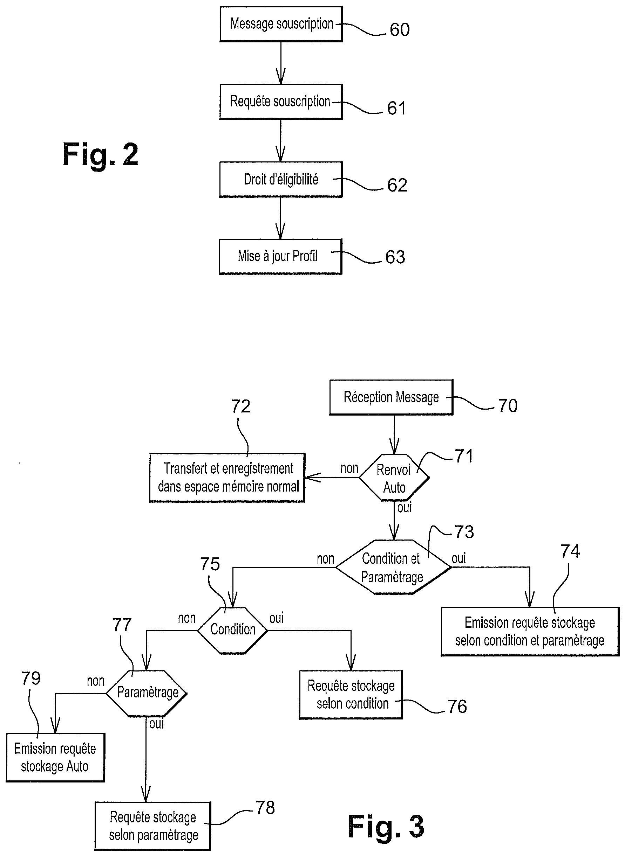

La figure 2 montre une illustration d'étapes correspondant à une souscription d'un utilisateur à un service de stockage spécial de l'opérateur. La figure 2 montre une première étape préliminaire 60 dans laquelle un message de souscription est élaboré et envoyé par le serveur 30 de services à une liste d'identifiant/adresse idᵤ destinataires via le réseau 11. Cette liste est définie par l'opérateur du réseau. Ce message de souscription est de préférence un message de type SMS comportant un lien de souscription à un service de stockage spécial ainsi que des instructions d'activation de ce lien. Ce lien de souscription peut être une adresse URL ou un numéro de téléphone spécial. Le message de souscription peut être un menu vocal.

Lorsque l'utilisateur active le lien, en le cliquant par exemple, une page de requête de souscription est ouverte à une étape 61, via le réseau 11 ou via un réseau WAP du téléphone mobile. Sur cette page, l'utilisateur devra renseigner un certain nombre d'informations dont son nom, son prénom, une capacité de stockage totale (10 Mo, 100 Mo, ...), une durée de stockage (X mois, X année ou à vie, X étant un nombre entier positif), une capacité de stockage à affecter à chaque type de multimédia. L'utilisateur sera également tenu de choisir un identifiant et/ou un mot de passe permettant l'accès et la gestion à l'espace mémoire spécial attribué.

Cette requête de souscription est transmise au serveur 30 de services via le réseau 11 suite à une validation de l'utilisateur.

A une étape 62, dès que le serveur 30 de services reçoit la requête de souscription, il abonne l'utilisateur à ce service en lui attribuant un droit d'éligibilité. Puis, le serveur 30 crée une nouvelle ligne dans la base 33 de données. L'abonnement au service prend ainsi effet immédiatement à compter de la réception de la requête de souscription par le serveur 30. Le serveur 30 émet, à une étape 63, une signalisation au réseau 11. Cette signalisation comporte le droit d'éligibilité attribué afin que le profil de l'utilisateur soit mis à jour dans la base de données du réseau.

Dans une variante, la requête de souscription est renseignée directement par l'utilisateur sur le site Internet de l'opérateur. Suite à une validation de cette requête, cette dernière est transmise au réseau 11 via le réseau de l'Internet.

Dans une variante, le droit d'éligibilité est attribué par un administrateur du réseau de l'opérateur, par exemple lorsque la requête de souscription est renseignée en format papier. Dans ce cas, l'administrateur enregistre une nouvelle ligne dans la base de données d'identification tout en mettant à jour le profil de l'utilisateur dans la base de données du réseau.

Dans un mode de réalisation préféré, dès qu'un droit d'éligibilité est attribué à l'utilisateur, le serveur 30 envoie au terminal 10 de l'utilisateur un logiciel d'élaboration de requête de stockage. Le microprocesseur 12 du terminal 10 exécute les codes instructions du logiciel afin d'installer sur le terminal 10 une commande d'élaboration d'une requête de stockage. Cette commande peut être un menu déroulant. La requête de stockage élaborée comporte le message personnel à enregistrer avec un en-tête renseignant sur le type de la requête.

La figure 3 montre une illustration d'étapes correspondant à l'émission d'une requête de stockage par l'utilisateur via le terminal 10. La figure 2 montre une première étape préliminaire 70 dans laquelle le terminal 10 reçoit un message multimédia personnel, tels que des messages voix, SMS ou MMS. Dès réception de ce message, le terminal 10 détermine, à une étape 71, si un renvoi automatique vers le numéro de l'utilisateur est paramétré.

Ce paramétrage est en général effectué au préalable par l'utilisateur du terminal 10. Dans une variante, le logiciel d'élaboration de requête de stockage peut comporter également des codes instructions aptes à paramétrer un renvoi automatique des messages reçus lors de son exécution par le microprocesseur 12.

Si aucun renvoi automatique n'a été paramétré, le message multimédia personnel est, à une étape 72, transféré et enregistré dans la mémoire de messagerie individualisée correspondante. Ultérieurement, l'utilisateur peut élaborer et émettre manuellement une requête de stockage comportant ledit message personnel.

Si un renvoi automatique est paramétré par l'utilisateur, alors le microprocesseur du terminal 10 détermine, aux étapes 73 à 79, si la mémoire de programme comporte des instructions d'opérations conditionnelles et/ou des opérations de paramétrages de planification.

Les opérations conditionnelles ou de paramétrages sont du type «si»... «alors»... «sinon». Par exemple, une opération conditionnelle pourrait s'énoncer ainsi :
- si le message reçu est du type MMS, alors le transférer vers la messagerie individualisée, ou
- si le message reçu est du type voix et provient d'une personne Z, alors élaborer et émettre sur le réseau 11 une requête de stockage.

Une opération de paramétrage permet une planification automatique d'une fréquence d'élaboration et d'émission d'une requête de stockage sur le réseau 11. Une opération de paramétrage peut être du type :
- si le message reçu est du type voix, alors élaborer et émettre sur le réseau 11 une requête de stockage à 30 minutes de la réception du message.

A l'étape 73, le microprocesseur 12 du terminal 10 détermine s'il existe des instructions d'opérations conditionnelles et de paramétrages. Si c'est le cas, le terminal 10 élabore et envoie, à l'étape 74, une requête de stockage sur le réseau 11 selon les conditions et les paramètres de planification. Sinon, lorsqu'il n'existe que des instructions d'opérations conditionnelles, à l'étape 75, alors le terminal 10 élabore et envoie, à l'étape 76, une requête de stockage sur le réseau 11 selon les conditions. Sinon, lorsqu'il n'existe que des instructions d'opérations de paramétrages, à l'étape 77, alors le terminal 10 élabore et envoie, à l'étape 78, une requête de stockage sur le réseau 11 selon les paramètres de planification. Sinon, lorsque seul le renvoi automatique a été programmé sans instructions d'opérations conditionnelles et de paramétrages, alors le terminal 10 élabore et envoie, à l'étape 79, une requête de stockage sur le réseau 11.

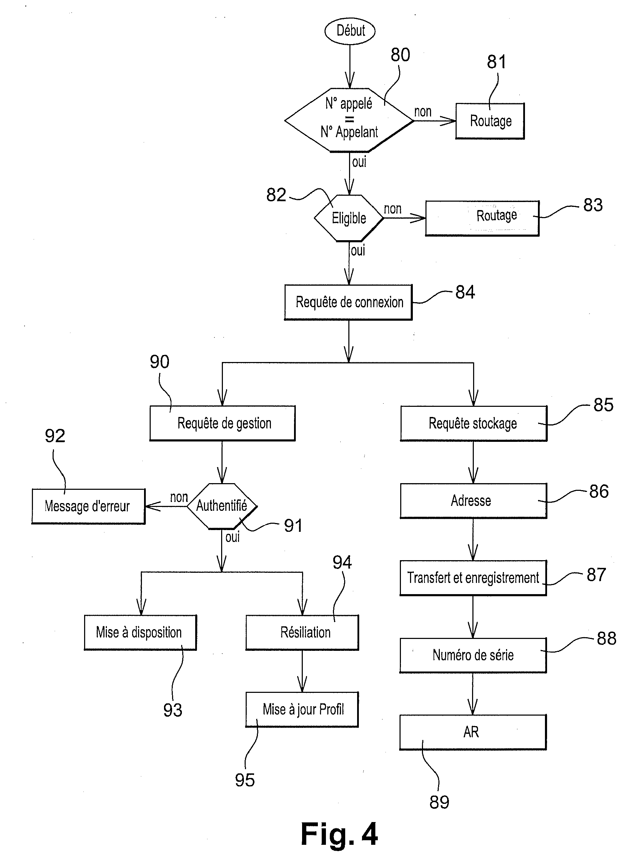

La figure 4 montre une illustration d'étapes correspondant à une mise en œuvre du procédé selon l'invention. A une étape 80 de la figure 4, lorsqu'une communication est reçue par le réseau 11 à destination du terminal 10, le serveur de routage identifie l'identifiant/adresse idᵤ de l'appelant comme étant client de l'opérateur, via la base de données du réseau, avant d'acheminer ladite communication. Lorsque, l'identifiant/adresse idᵤ de l'appelant est différent de celui de l'appelé, alors le serveur de routage achemine, à une étape 81, la communication vers son destinataire.

Sinon, le serveur de routage vérifie, à une étape 82, l'éligibilité de l'utilisateur à bénéficier du service de gestion de l'opérateur. Pour ce faire, il vérifie si l'identifiant/adresse id_{U} de l'utilisateur est associé à un droit d'éligibilité, via la base de données du réseau. Lorsque l'utilisateur n'est pas éligible à ce service, alors le serveur de routage achemine de manière classique l'appel ou le message, à une étape 83 respectivement vers la messagerie vocale ou SMS du terminal 10 en cas de programmation de renvoi conditionnel ou vers le terminal 10 lui-même entrainant une tonalité d'occupation.

Sinon, lorsque l'utilisateur est éligible, le serveur de routage transmet, à une étape 84, au serveur 30 de services une requête de connexion. Les étapes 85 à 89 sont exécutées par le serveur 30 de services lorsqu'une requête du type stockage est émise. Les étapes 90 à 93 sont exécutées par le serveur 30 de services lorsqu'une requête de type gestion est émise. Les étapes 90 à 92, et, 94 et 95, sont exécutées par le serveur 30 de services lorsque la requête de gestion est du type résiliation.

La requête de stockage de l'étape 85 est émise par le terminal 10 lorsqu'il reçoit un message multimédia d'un tiers. Cette émission peut être effectuée de manière automatique par un renvoi automatique et/ou conditionnel et/ou paramétré au préalable, comme montré à la figure 3. Elle peut être également effectuée manuellement par l'utilisateur du terminal 10. La requête de stockage de l'étape 85 peut être également émise par le terminal 10, lorsque l'utilisateur s'envoie à lui-même un message multimédia créé.

A l'étape 86, le serveur de services traite la requête de stockage reçue. Il détermine dans la base 33 d'identification l'adresse AD de la partie de l'espace mémoire où stocker le message contenu dans la requête de stockage selon le type de multimédia du message.

A l'étape 87, le serveur 30 de services oriente le message multimédia contenu dans la requête de stockage vers la partie de l'espace mémoire spécial identifiée. Le message multimédia est ensuite enregistré dans cette partie de l'espace mémoire spécial.

A l'étape 88, un numéro de série affecté à ce message enregistré est généré par le serveur 30 de services. Cette affectation d'un numéro de série permet un archivage aisé des messages multimédia.

A l'étape 89, le serveur 30 de services envoie une notification de confirmation d'enregistrement au terminal 10 de l'utilisateur.

Dans une variante, avant l'émission de la notification de confirmation d'enregistrement à l'utilisateur, une étape de validation du message à enregistrer peut être mise en œuvre par le serveur 30 de services. Dans ce cas, le serveur 30 de services envoie un message de validation du message à enregistrer en permettant à l'utilisateur de réécouter, d'effacer ou de valider ledit message.

La requête de gestion émise par le terminal 10, à l'étape 90, peut être un appel sortant à destinataire du numéro de téléphone de l'utilisateur. Elle peut être un message SMS émis vers le numéro de l'utilisateur. Dès réception de cette requête de gestion, un système de menu vocal est mis en place par le serveur 30 afin de permettre éventuellement à l'utilisateur de sélectionner des rubriques particulières dans celles proposées à partir du clavier du terminal 10.

A l'étape 91, le serveur vocal authentifie l'utilisateur du terminal 10 via le menu vocal interactif. Pour ce faire, le serveur 30 de services envoie au terminal 10 via le menu vocal une demande d'authentification de l'utilisateur à l'aide d'un identifiant et/ou d'un mot de passe. L'identifiant et/ou le mot de passe saisi et validé par l'utilisateur est alors envoyé au serveur 30 de services.

Dans une variante, lorsque la requête de gestion est un message SMS, elle peut être accompagnée par un identifiant et/ou un mot de passe. Dans ce cas, le serveur 30 de services n'envoie pas une demande d'authentification, il authentifie directement l'utilisateur en validant ou invalidant l'identifiant et/ou le mot de passe contenu dans le message.

Lorsque le serveur 30 de services invalide l'identifiant et/ou le mot de passe, il envoie, à l'étape 92, un message d'erreur au terminal 10 via le réseau 11.

A l'étape 93, lorsque l'identifiant et/ou le mot de passe est validé, le serveur 70 vocal propose à l'utilisateur via son menu vocal trois types d'archives consultables selon le type de multimédia. Par exemple, pour les archives de type vocal "taper 1", pour les archives de type MMS "taper 2", pour les archives de type SMS "taper 3". En fonction du type d'archive choisi par l'utilisateur, le serveur de services détermine l'adresse AD de la partie de l'espace mémoire spécial approprié et met à la disposition de l'utilisateur cette partie de l'espace mémoire spécial via l'interface du terminal 10. Cette mise à disposition, permet à l'utilisateur d'accéder à cet espace mémoire de manière transparente.

Grâce au logiciel de navigation du terminal 10, l'utilisateur peut gérer les données contenues dans cet espace mémoire qui lui est attribué. Le logiciel de navigation permet à l'utilisateur d'écouter les messages vocaux, d'effectuer une lecture rapide des messages, d'effectuer un saut de message, d'effectuer un retour en arrière, de rechercher des messages, de consulter, de réorganiser ou de supprimer des messages archivés.

A une étape 94, lorsque l'identifiant et/ou le mot de passe est validé, un menu vocal peut proposer à l'utilisateur une résiliation. Par exemple, pour résilier le service de stockage "taper 4". Dès la validation de ce menu par une saisie correspondante sur le clavier du terminal 10, la mise à disposition de l'utilisateur de son espace mémoire prend alors fin à l'expiration d'un délai maximum de Y jours suivant la résiliation, par exemple Y = 6. La résiliation peut être également effectuée par l'administrateur du réseau de l'opérateur. Cette résiliation entraîne l'élaboration, à l'étape 95, d'une signalisation comportant des instructions de suppression du droit d'éligibilité de l'utilisateur au service de stockage de l'opérateur. Cette signalisation est transmise par le serveur 30 de service au réseau 11 afin que le profil de l'utilisateur dans la base de données du réseau soit mis à jour.

La résiliation du contrat d'abonnement de l'utilisateur à l'opérateur ne provoque pas la résiliation automatique du contrat souscrit au service de stockage.

L'invention ne se limite pas aux modes de réalisation représentés sur les figures.

En particulier, la requête de gestion peut être émise depuis un réseau Internet en lien avec le serveur 30 de services de l'opérateur. Après une étape d'authentification de l'utilisateur, ce dernier peut visualiser les messages de type SMS ou MMS archivés ainsi qu'écouter en mode streaming les messages audio archivés. Dans ce cas, les fonctionnalités de navigation ou de gestion de messages sont dupliquées sur l'interface Internet de l'utilisateur.

Ainsi, grâce à l'invention, l'utilisateur seul détenteur de l'identifiant et/ou du mot de passe peut consulter ses messages pendant une durée préalablement définie et sans perte de données.

Un autre avantage de l'invention est que des informations contenues dans l'espace mémoire personnalisé peuvent être consultées par des tiers autorisés par une autorité compétente, dans le cas par exemple d'une commission rogatoire, d'une réquisition judiciaire pour, par exemple, des cas de meurtres, d'enlèvements, de terrorisme, d'atteintes à la sûreté de l'Etat, de faits de guerres, etc...

## Revendications

1. Procédé de gestion de données multimédia personnelles, mémorisées dans un réseau (11) de télécommunications, via un terminal (10) d'un utilisateur de ce réseau, dans lequel :
- on individualise dans le réseau un espace mémoire (33f, 33e) spécial multimédia pour le stockage de données multimédia concernant l'utilisateur, en associant dans une base de données multimédia d'un serveur de services du réseau, un identifiant de l'utilisateur à l'espace mémoire multimédia spécial,
- on émet (84) une requête de connexion à l'espace mémoire multimédia spécial de l'utilisateur via le réseau, et
- on émet (85) une requête de stockage où des données multimédia contenues dans la requête sont affectées à l'espace mémoire spécial, ou
- on émet (90) une requête de gestion et on authentifie la requête de gestion ou un émetteur de ladite requête, et en cas d'authentification positive, l'espace mémoire spécial est mis à disposition de l'émetteur de la requête pour gestion des données stockées via le terminal de l'utilisateur,
**caractérisé en ce que**, ledit terminal comportant des codes instructions pour transmettre ladite requête de gestion en conséquence d'un appel du terminal à son propre numéro, la requête de connexion est émise lorsque l'utilisateur compose son propre numéro.

2. Procédé selon la revendication 1, **caractérisé en ce que** lors de l'émission de la requête de connexion, on vérifie si l'utilisateur est éligible en ayant souscrit au préalable à un service de stockage spécial.

3. Procédé selon la revendication 2, **caractérisé en ce que** :
- on émet via le terminal une requête de souscription (20) comportant les caractéristiques de stockage telles que notamment la durée de stockage et la capacité de stockage,
- le serveur de services traite cette requête,
- au cours de ce traitement, on définit un régime (33b, 33c) de l'espace mémoire spécial, selon les caractéristiques de stockage,
- on met à jour (42) un profil de l'utilisateur dans le réseau en ajoutant à une liste des services du profil auxquels a droit l'utilisateur, le droit d'éligibilité au service de stockage spécial.

4. Procédé selon la revendication 3, **caractérisé en ce que** pour avoir accès à une telle gestion authentifiée, la requête de souscription comporte l'édition d'un identifiant et/ou un mot de passe choisi par l'utilisateur lui permettant l'accès et la gestion à l'espace mémoire spécial.

5. Procédé selon l'une des revendications 1 à 4, **caractérisé en ce que** la requête de stockage (21) est émise par le terminal, lorsqu'il reçoit un message multimédia d'un tiers, par un renvoi automatique (71) et/ou conditionnel (75) et/ou paramétré (77) au préalable vers le numéro de l'utilisateur.

6. Procédé selon l'une des revendications 1 à 5, **caractérisé en ce que** la requête de stockage est émise manuellement vers le numéro de l'utilisateur, ladite requête de stockage comportant un message multimédia créé par l'utilisateur ou un message multimédia enregistré dans l'espace mémoire individualisé.

7. Procédé selon l'une des revendications 1 à 6, **caractérisé en ce que** :
- lors de l'enregistrement des données multimédia dans l'espace mémoire spécial :
- on génère (88) automatiquement un numéro de série qui est affecté aux données multimédia enregistrées,
- on élabore (89) une notification de confirmation d'enregistrement comportant notamment le numéro de série,
- on transmet la notification au terminal de l'utilisateur via le réseau.

8. Procédé selon la revendication 7, **caractérisé en ce que** la notification est un message SMS ou un message vocal.

9. Procédé selon l'une des revendications 1 à 6, **caractérisé en ce que** la requête de gestion est traitée via un menu vocal (49) après authentification.

10. Procédé selon la revendication 7, **caractérisé en ce que** :
- on transmet une requête de résiliation (94) du droit d'éligibilité au service de stockage spécial, par une validation d'un menu vocal lors du traitement de la requête de gestion,
- on supprime (53) de la base de données du serveur les données contenues dans l'espace mémoire spécial,
- on met à jour (95) le profil de l'utilisateur dans le réseau en supprimant de la liste des services du profil auxquels a droit l'utilisateur le droit d'éligibilité au service de stockage spécial.

11. Procédé selon l'une des revendications 1 à 10, **caractérisé en ce que** :
- on détermine (55) une position géographique du terminal de l'utilisateur à des intervalles dans le temps préalablement définis,
- on enregistre (56) cette position géographique dans l'espace mémoire spécial.

12. Procédé selon l'une des revendications 1 à 11, **caractérisé en ce que** :
- on transmet au serveur de services une requête de suspension (57) du droit d'éligibilité comportant un délai de suspension prédéfini,
- on met à jour le profil de l'utilisateur dans le réseau en suspendant durant ce délai le droit d'éligibilité,
- au plus tard à la fin du délai, le droit d'éligibilité est réactivé ou supprimé.

13. Installation (18) de télécommunications comportant un serveur (11) de services **caractérisé en ce que** ledit serveur comporte des moyens aptes à mettre en œuvre un procédé de gestion de données multimédia personnelles selon l'une quelconque des revendications 1 à 12.

## Patentansprüche

1. Verfahren zur Verwaltung von persönlichen Multimediadaten, die in einem Funknetz (11) gespeichert sind, über ein Endgerät (10) eines Benutzers dieses Netzes, umfassend:
- Individualisieren, in dem Netz, eines Multimedia-Spezialspeicherplatzes (33f, 33e) für die Speicherung von Multimediadaten, die den Benutzer betreffen, indem in einer Multimediadatenbank eines Dienstleistungsservers des Netzes eine Kennung des Benutzers dem Multimedia-Spezialspeicherplatz zugeordnet wird,
- Aussenden (84) einer Anfrage zur Verbindung mit dem Multimedia-Spezialspeicherplatz des Benutzers über das Netz und
- Aussenden (85) einer Anfrage zur Speicherung, wobei Multimediadaten, die in der Anfrage enthalten sind, dem Spezialspeicherplatz zugewiesen werden, oder
- Aussenden (90) einer Anfrage zur Verwaltung und Authentifizieren der Anfrage zur Verwaltung oder eines Senders der Anfrage, und im Fall einer positiven Authentifizierung wird der Spezialspeicherplatz dem Sender der Anfrage zur Verwaltung der gespeicherten Daten über das Endgerät des Benutzers bereitgestellt,
**dadurch gekennzeichnet, dass**, da das Endgerät Anweisungscodes umfasst, um die Anfrage zur Verwaltung infolge eines Anrufs des Endgeräts an seine eigene Nummer zu übermitteln, die Anfrage zur Verbindung ausgesendet wird, wenn der Benutzer seine eigene Nummer wählt.

2. Verfahren nach Anspruch 1, **dadurch gekennzeichnet, dass** beim Aussenden der Anfrage zur Verbindung geprüft wird, ob der Benutzer berechtigt ist, indem er sich im Vorhinein zu einer Spezialspeicherdienstleistung angemeldet hat.

3. Verfahren nach Anspruch 2, **dadurch gekennzeichnet, dass**:
- über das Endgerät eine Anfrage zur Anmeldung (20) ausgesendet wird, welche die Speichercharakteristika umfasst, wie insbesondere die Speicherdauer und die Speicherkapazität,
- das Dienstleistungsserver diese Anfrage verarbeitet,
- während dieser Verarbeitung eine Betriebsart (33b, 33c) des Spezialspeicherplatzes definiert wird, gemäß den Speichercharakteristika,
- ein Profil des Benutzers in dem Netz aktualisiert wird (42), indem einer Liste der Dienstleistungen des Profils, auf welche der Benutzer einen Anspruch hat, der Anspruch auf Berechtigung zur Spezialspeicherdienstleistung hinzugefügt wird.

4. Verfahren nach Anspruch 3, **dadurch gekennzeichnet, dass**, um Zugang zu einer solchen authentifizierten Verwaltung zu haben, die Anfrage zur Anmeldung die Ausgabe einer Kennung und/oder eines Passworts, die bzw. das von dem Benutzer gewählt wird, umfasst, wodurch ihm der Zugang und die Verwaltung des Spezialspeicherplatzes ermöglicht werden.

5. Verfahren nach einem der Ansprüche 1 bis 4, **dadurch gekennzeichnet, dass** die Anfrage zur Speicherung (21) von dem Endgerät ausgesendet wird, wenn es eine Multimedianachricht von einem Dritten empfängt, durch eine automatische (71) und/oder bedingte (75) und/oder im Vorhinein eingestellte (77) Umleitung an die Nummer des Benutzers.

6. Verfahren nach einem der Ansprüche 1 bis 5, **dadurch gekennzeichnet, dass** die Anfrage zur Speicherung manuell an die Nummer des Benutzers ausgesendet wird, wobei die Anfrage zur Speicherung eine Multimedianachricht umfasst, die von dem Benutzer erzeugt wurde, oder eine Multimedianachricht, die in dem individualisierten Speicherplatz gespeichert wurde.

7. Verfahren nach einem der Ansprüche 1 bis 6, **dadurch gekennzeichnet, dass**:
- beim Speichern der Multimediadaten in dem Spezialspeicherplatz:
- eine Seriennummer automatisch generiert (88) wird, die den gespeicherten Multimediadaten zugewiesen ist,
- eine Meldung zur Bestätigung der Speicherung erstellt (89) wird, die insbesondere die Seriennummer umfasst,
- die Meldung an das Endgerät des Benutzers über das Netz übermittelt wird.

8. Verfahren nach Anspruch 7, **dadurch gekennzeichnet, dass** die Meldung eine SMS-Nachricht oder eine Sprachnachricht ist.

9. Verfahren nach einem der Ansprüche 1 bis 6, **dadurch gekennzeichnet, dass** die Anfrage zur Verwaltung über ein Sprachmenü (49) nach Authentifizierung verarbeitet wird.

10. Verfahren nach Anspruch 7, **dadurch gekennzeichnet, dass**:
- eine Anfrage zur Kündigung (94) des Anspruchs auf Berechtigung zur Spezialspeicherdienstleistung übermittelt wird, durch eine Validierung eines Sprachmenüs bei der Verarbeitung der Anfrage zur Verwaltung,
- die Daten, die in dem Spezialspeicherplatz enthalten sind, aus der Datenbank des Servers gelöscht (53) werden,
- das Profil des Benutzers in dem Netz aktualisiert (95) wird, indem aus der Liste der Dienstleistungen des Profils, auf welche der Benutzer einen Anspruch hat, der Anspruch auf Berechtigung zur Spezialspeicherdienstleistung gelöscht wird.

11. Verfahren nach einem der Ansprüche 1 bis 10, **dadurch gekennzeichnet, dass**:
- eine geografische Position des Endgeräts des Benutzers in im Vorhinein definierten Zeitintervallen bestimmt (55) wird,
- diese geografische Position in dem Spezialspeicherplatz gespeichert (56) wird.

12. Verfahren nach einem der Ansprüche 1 bis 11, **dadurch gekennzeichnet, dass**:
- eine Anfrage zur Aussetzung (57) des Anspruchs auf Berechtigung an den Dienstleistungsserver übermittelt wird, die eine vordefinierte Aussetzungsfrist umfasst,
- das Profil des Benutzers in dem Netz aktualisiert wird, indem während dieser Frist der Anspruch auf Berechtigung ausgesetzt wird,
- spätestens am Ende dieser Frist der Anspruch auf Berechtigung reaktiviert oder gelöscht wird.

13. Funkanlage (18), umfassend einen Dienstleistungsserver (11), **dadurch gekennzeichnet, dass** der Server Mittel umfasst, die geeignet sind, ein Verfahren zur Verwaltung von persönlichen Multimediadaten nach einem der Ansprüche 1 bis 12 auszuführen.

## Claims

1. A method for managing personal multimedia data, stored in a telecommunications network (11), via a terminal (10) of a user of this network, wherein:
- a special multimedia memory space (33f, 33e) for storing multimedia data relating to the user is individualised in the network, by associating in a multimedia database of a network service server, an identifier of the user to the special multimedia memory space,
- a request is emitted (84) for connection to the special multimedia memory space of the user via the network, and
- a storage request is emitted (85) where multimedia data contained in the request are allocated to the special memory space, or
- a management request is emitted (90) and the management request or an emitter of said request is authenticated, and in the event of positive authentication, the special memory space is made available to the emitter of the request for management of data stored via the user's terminal,
**characterised in that**, said terminal including instruction codes for transmitting said management request as a result of a call from the terminal to its own number, the connection request is emitted when the user dials his own number.

2. The method according to claim 1, **characterised in that** when sending the connection request, it is checked whether the user is eligible by having previously subscribed to a special storage service.

3. The method according to claim 2, **characterised in that**:
- a subscription request (20) including the storage features such as in particular the storage duration and the storage capacity, is emitted via the terminal,
- the service server processes this request,
- during this processing, a regime (33b, 33c) of the special memory space is defined, according to the storage features,
- a profile of the user is updated (42) in the network by adding to a list of profile services to which the user is entitled, the right of eligibility for the special storage service.

4. The method according to claim 3, **characterised in that** to have access to such authenticated management, the subscription request includes the edition of an identifier and/or a password chosen by the user allowing him access and management to the special memory space.

5. The method according to one of claims 1 to 4, **characterised in that** the storage request (21) is emitted by the terminal, when it receives a multimedia message from a third party, by a return which is automatic (71) and/or conditional (75) and/or configured (77) beforehand to the user's number.

6. The method according to one of claims 1 to 5, **characterised in that** the storage request is emitted manually to the user's number, said storage request including a multimedia message created by the user or a multimedia message recorded in the individualised memory space.

7. The method according to one of claims 1 to 6, **characterised in that**:
- when recording multimedia data in the special memory space:
- a serial number is automatically generated (88) which is assigned to the recorded multimedia data,
- a registration confirmation notification including the serial number is prepared (89),
- the notification is transmitted to the user's terminal via the network.

8. The method according to claim 7, **characterised in that** the notification is an SMS message or a voice message.

9. The method according to one of claims 1 to 6, **characterised in that** the management request is processed via a voice menu (49) after authentication.

10. The method according to claim 7, **characterised in that**:
- a request for termination of the eligibility right is transmitted (94) to the special storage service, by validation of a voice menu during the processing of the management request,
- the data contained in the special memory space are deleted (53) from the database of the server,
- the profile of the user is updated (95) in the network by deleting from the list of profile services to which the user is entitled the right of eligibility for the special storage service.

11. The method according to one of claims 1 to 10, **characterised in that**:
- a geographic position of the user's terminal is determined (55) at predefined time intervals,
- this geographical position is recorded (56) in the special memory space.

12. The method according to one of claims 1 to 11, **characterised in that**:
- a request for suspension (57) of the eligibility right including a predefined suspension period is transmitted to the service server,
- the profile of the user is updated in the network by suspending the eligibility right during this period,
- the right of eligibility is reactivated or deleted at the latest at the end of the period.

13. A telecommunications installation (18) including a service server (11) **characterised in that** said server includes means capable of implementing a method for managing personal multimedia data according to any one of claims 1 to 12.
